# EUROPEAN PATENT APPLICATION

(11) **EP 2 930 677 A1**
(43) Date of publication of application: **14.10.2015**
(21) Application number: 15162820.3
(22) Date of filing: 08.04.2015
(51) Int. Cl.: G06Q 20/20, G07F 5/18

(54) **DATA TRANSMISSION FROM A VENDING MACHINE THROUGH CUSTOMERS' CELLULAR DEVICES**

(30) Priority: 09.04.2014 US 201461977148 P
(71) Applicant: NAYAX, 6971921 Tel Aviv (IL)
(72) Inventor: Ben Avi, David, 47231 Ramat Hasharon (IL)
(74) Representative: Harangozo, Gabor

(57) **Abstract**

A system for transmitting stored operational data from a vending machine to a remote server in association with a mobile cellular device, which is operative to communicate over a local wireless link with the vending machine and with the Internet via a cellular network. The system comprises a vending-machine data handler, resident in the vending machine, and a mobile data handler, resident in the cellular device, wherein the vending-machine data handler is operative to fetch the operational data and to cause them to be transmitted to the mobile data handler and wherein the mobile data handler is operative, upon the establishment of communication between the cellular device and the cellular network, to cause data obtained from the vending-machine data handler to be transmitted over the cellular network and the Internet to the remote server.

Also disclosed is a method for transmitting stored operational data from a vending machine to a remote server, using the disclosed system.

## Description

### FIELD OF THE INVENTION

The invention relates generally to communications between vending machines and cellular devices and, in particular, to the transmission of status data from a vending machine through a cellular device to a remote server.

### BACKGROUND

In a typical vending machine (VM), operational data, such as running sale quantities of the various items, remaining stock, empty bins and malfunctions, are continuously accumulated and stored locally. Conventionally such data are collected periodically or occasionally by an attendant (who also stocks the VM as needed). It is often desirable to obtain such data more frequently. A possible solution is to provide the VM with a communication link, such as an Internet connection or a cellular terminal, over which the data could be transmitted to an appropriate server. Such a solution is costly - both in initial investment and in running expenses - making it often uneconomical. Moreover, a VM is often located at a site with no readily available Internet connection and with poor or no cellular communication.

It is also known for a customer with a cellular device, such as a telephone or a tablet (also known as a mobile device and to be referred to as a cellphone, for short) to effect a vending operation at a nearby VM as follows: The VM is equipped with a local wireless communication device, based on a commonly available technology such as Bluetooth or near-field communication (NFC). The cellphone, being equipped with a similar communication device and with an appropriate application software, communicates with the VM via the devices, to effect payment and, in some applications, to obtain information on the available merchandise or services in the VM and to select the desired item. Obtaining authorization and effecting a payment through the cellphone is generally done in either of two ways: (a) charging a so-called digital wallet, stored in the cellphone, through an appropriate application; (b) communicating with an appropriate server to effect a charge by any of the means available over the Internet, such as a credit card, PayPal, etc. Clearly, the second way is possible only if cellular communication is available at the site.

Vending machines are typical for the more general class of so-called unattended machines, such as goods- or service dispensers and controlled-access stock rooms, to which access may be gained by proper identification devices, which in the present context include cellphones. The term vending machine (VM) in the sequel should be understood to include any such unattended machine.

### SUMMARY OF THE INVENTION

The object of the present invention is to provide an inexpensive and readily available conduit for transmission of operational data from a vending machine (VM) to a remote server, by utilizing available communication links, namely a local wireless link between the VM and a cellular device and a long-range wireless link consisting of a cellular network in combination with the Internet. The term "operational data" is to be understood as explained above in the Background section and to not include data exchanged with any customer while carrying out, or attempting to carry out, a transaction.

The solution provided by the present invention assumes that the VM and a customer's cellphone (cellular, or mobile, device) are both equipped to communicate with each other over a local communication link to effect a vending transaction (also referred to, interchangeably, as a purchasing transaction), as described in the Background section. Typically the VM then has a dedicated programmable Customer Interface module that is connected to a local wireless communication device and to the VM's controller. Likewise, an appropriate cellphone has a Vending Application software module, communicative with its local wireless communication unit, with a digital wallet module (or application) and with the cellular communication facilities. The local communication link may be based on any known technology, primarily wireless, including RF technologies, such as Wi-Fi, Bluetooth and so-called Near Field Communication (NFC) or various optical or sonic technologies, as well as coded visual displays, such as barcodes and QR patterns.

According to the invention, the system described above is enhanced by adding to the VM's Customer Interface module a Data Handler that is communicative with a data storage module in the machine's controller, in which operational data are stored, and by adding also to the Vending Application in the cellphone a Data Handler. In operation, whenever the Vending Application in a cellphone (carried by a customer or a would-be customer) communicates with the Customer Interface module in a nearby VM in the course of a vending transaction, the Data Handler within it also downloads from the VM's Data Storage module in its controller the desired operational data, as a status update, and transmits them to the cellphone. The Data Handler within the cellphone receives the status update and temporarily stores it in the cellphone. When subsequently (immediately or at some later time) the cellphone is in communication with its cellular network, it addresses the appropriate server and sends thereto the stored status update.

It is noted that a system according to the invention enables digital transmission (uploading) of status information and other operational data from a vending machine (VM) to a server without installing any cellular or other long-distance communication devices in the VM or when no cellular communication and no direct Internet connection are possible at the site of the VM. Any appropriately equipped customer's cellphone can thus become the conduit for transmitting the data to the server, by being at some time in local communication with the VM and possibly at another time - in cellular Internet communication with the server. It is also noted that such data transmission may be repeated unlimited times, each time with respect to newly accumulated, or other, operational data, utilizing, in general, different cellphones that are carried by different customers.

Thus, in one aspect, the invention is of a system in association with a vending machine and with a mobile cellular device, which are operative to mutually communicate over a local wireless link, the cellular device being also operative to communicate via a cellular network with other devices connected to the Internet, the system serving to transmit operational data stored in the vending machine to a remote server and comprising a vending-machine data handler, resident in the vending machine, and a mobile data handler, resident in the cellular device, wherein the vending-machine data handler is operative, upon the establishment of communication over the local wireless link, to fetch any of the stored operational data and to cause them to be transmitted to the mobile data handler and wherein the mobile data handler is operative, upon the establishment of communication between the cellular device and the cellular network, to cause data obtained from the vending-machine data handler to be transmitted over the cellular network and the Internet to the remote server.

Preferably the vending-machine data handler is part of a customer interface and the vending-machine data handler is part of a vending application, the customer interface and the vending application being cooperative to effect vending transactions.

In another aspect the invention is of a method, in association with a vending machine and with a mobile cellular device, which are operative to mutually communicate over a local wireless link, the cellular device being also operative to communicate with the Internet via a cellular network, the method serving to transmit stored operational data from the vending machine to a remote server and comprising -
(a) detecting whether a mobile cellular device is in communication with the vending machine over the local wireless link;
(b) when the cellular device is in communication with the vending machine, transmitting any stored operational data from the vending machine over the local wireless link to the cellular device;
(c) detecting whether the cellular device is in communication with the cellular network;
(d) whenever the cellular device first is in communication with the cellular network, transmitting any operational data received from the vending machine, over the cellular network and the Internet, to the remote server.

The steps of the method may be repeated in association with successively different mobile cellular devices.

### DETAILED DESCRIPTION OF A PREFERRED EMBODIMENT

The invention will now be described in greater detail in terms of a preferred, but non-limiting, embodiment and with reference to accompanying drawings, of which -
Figure 1 is a schematic block diagram of a system according to the invention and
Figure 2 is a flow diagram illustrating operation of the system of Fig. 1.

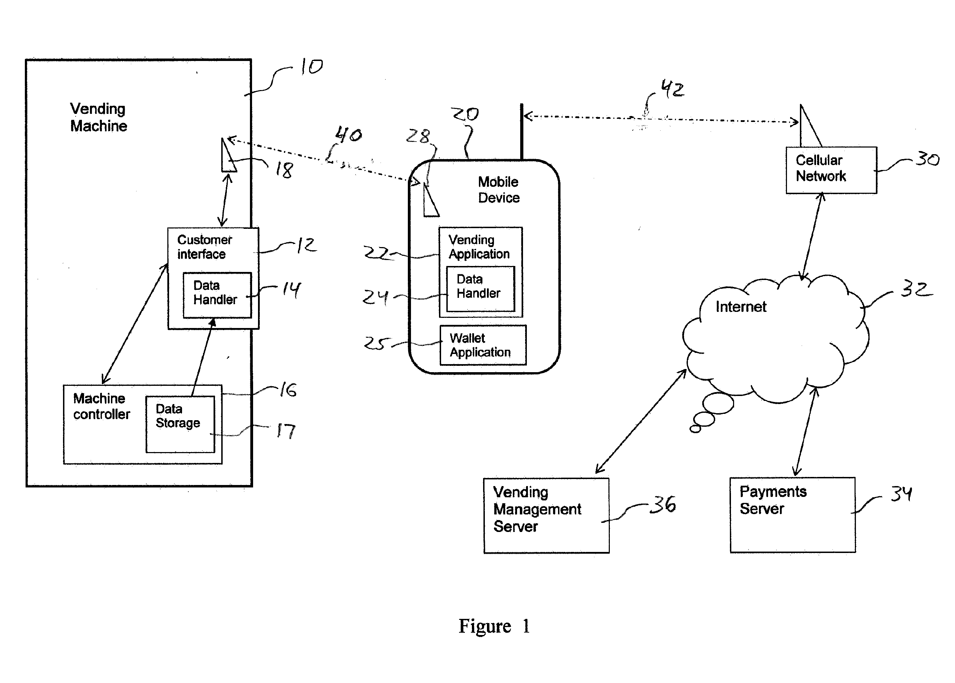

Turning first to **Figure 1****,** there is shown schematically a typical vending machine (VM) **10,** in which a Customer Interface (CI) module **12** is installed. The CI module is in wired communication with the VM's controller **16,** which controls the machine's operation (including vending) and typically collects data about the machine's status, past operations, current stock, malfunctions, etc. The collected data, termed operational data, are stored in the Data Storage (DS) module **17.** The CI module is also in wired communication with a local wireless communication unit **18,** such as one based on Smart Bluetooth 4 (BT4) technology. The BT4 technology has the advantage that the communication devices are inexpensive and consume very little electric power. As a feature of the present invention, the CI module includes a Data Handler (DH) software module **14,** capable of collecting operational data from DS module 17.

A mobile device, such as a cellular telephone (cellphone) **20,** is (as many cellphones nowadays are) also equipped with a local wireless communication unit **28,** which is compatible with the communication unit 18 in the VM and can automatically communicate with it when physically close enough, thus establishing a local wireless link 40 (e.g. Bluetooth 4 link). The cellphone 20 is loaded with an appropriate Vending application **22,** which includes a Data Handler (DH) **24,** and preferably also with a mobile wallet application **25.** The latter serves in carrying out payments during purchasing transactions with the VM, particularly when no cellular communication is available at the site. The Vending application 22 can communicate, via the local wireless link 40, with the CI module 12 in the VM 10 for the purpose of carrying out purchasing transactions. As a feature of the present invention, the DH module 14 in the VM 10 can push data, collected from DS 17, to the DH module 24 in the cellphone 20.

The cellphone 20 can communicate through the Internet **32 -** generally over a cellular communication link 42 and through the cellular network **30 -** to other network devices. For the purpose of vending transactions that do not involve the wallet application, the cellphone 20 can communicate, via the cellular network 30 and the Internet 32, with an appropriate Payments Server **34.** As a feature of the present invention, the DH 24 can also transmit status data, via the cellular network 30 and the Internet 32, to an appropriate Vending Management server **36** (having a specified IP address).

The novel operational features of the described system are: While the cellphone 20 communicates with the VM 10 in order to carry out a purchasing transaction (possibly even before any communication regarding the transaction commences), a status update is automatically generated by the DH module 14, from operational data pulled out of the DS module 17 in the Controller16. The status update is immediately sent over the local wireless communication link 40 to the DH module 24 in the cellphone 20, where it is stored internally. Whenever the cellphone 20 is in communication with its cellular network 30 - immediately or at some time later - the DH module 24 automatically sends the status update, via the cellular link 42, the cellular network 30 and the Internet 32, to the Vending Management server 36-thus completing the desired data transmission from the VM 10.

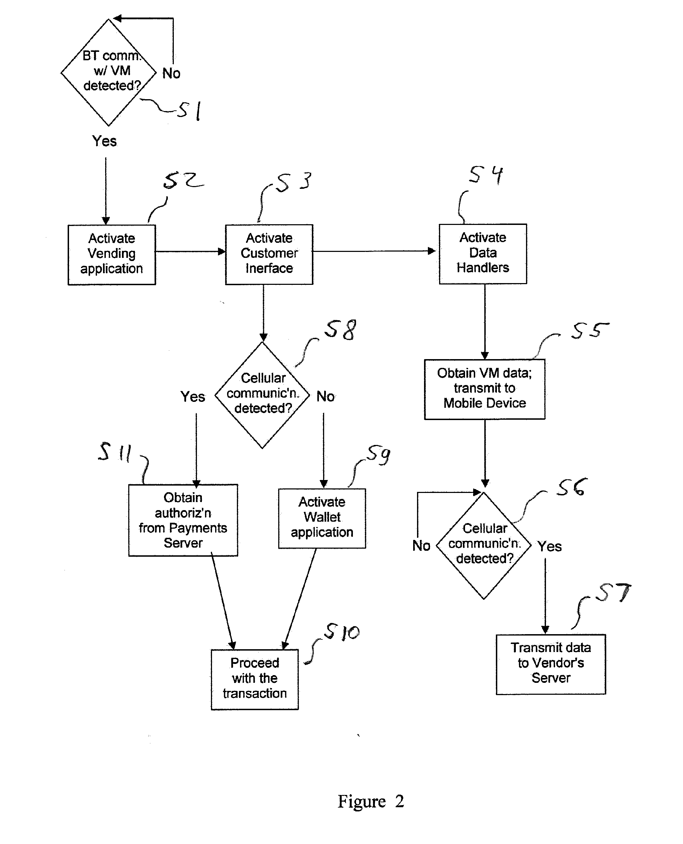

The operation of the system according to the invention is explained with reference to the flow chart of **Figure 2****.**
1. In step S 1, the cellphone periodically tests for local wireless communication with a vending machine.
2. In step S2, when a local wireless communication is detected by the cellphone, the Vending Application in the cellphone is activated and, consequently, a signal is sent to the Customer Interface in the VM.
3. Thus in step S3 the Customer Interface of the VM is activated, causing a dialog with the Vending application in the cellphone.
4. In step S4, if both the CI and the Vending application also include Data Handlers (thus incorporating the features of the present invention), they are activated.
5. Upon activation of the DHs, in step S5 the VM's Data Handler obtains operational data from the VM Controller's data storage and transmits them to the Data Handler in the cellphone's Vending application, where they are stored.
6. In step S6, the Vending application periodically tests for active communication between the cellphone and the cellular network.
7. In step S7, when such cellular communication is first detected, the stored status data are transmitted via the cellular network and the Internet to the Vending Management server (36 in Fig. 1).
   The following steps are optional and they are used to complete a vending transaction including an electronic payment.
8. In step S8, when the CI of the VM is activated (step S3), the Vending application in the cellphone tests for active communication between the cellphone and the cellular network.
9. In step S9, if no cellular communication exists between the cellphone and the cellular network, or if the customer prefers, the wallet application in the cellphone is activated.
10. In step S10, subsequently the Vending application and the CI cooperate to proceed with any requested vending transaction.
11. In step S11, if cellular communication between the cellphone and the cellular network does exist (step 8) and if the customer so prefers, an authorization procedure is carried out over the cellular network and the Internet between the Vending application and the Payments Server (34 in Fig. 1), after which the transaction proceeds as in step S10.

### INDUSTRIAL APPLICABILITY

The invention is realizable as software modules that are insertable in existing products.

## Claims

1. In association with a vending machine (10) and with a mobile cellular device (20), which are operative to mutually communicate over a local wireless link (40), the cellular device being also operative to communicate via a cellular network (30) with other devices connected to the Internet -
a system for transmitting operational data stored in the vending machine (10) to a remote server (36), the system comprising a vending-machine data handler (14), resident in the vending machine (10), and a mobile data handler (24), resident in the cellular device (20), wherein said vending-machine data handler (14) is operative, upon the establishment of communication over the local wireless link (40), to fetch any of the stored operational data and to cause them to be transmitted to said mobile data handler (24) and
wherein said mobile data handler (24) is operative, upon the establishment of communication between the cellular device (20) and the cellular network (30), to cause data obtained from said vending-machine data handler (24) to be transmitted over the cellular network (30) and the Internet (32) to said remote server (36).

2. The system of claim 1, wherein said vending-machine data handler (14) is part of a customer interface (12) and said mobile data handler (24) is part of a vending application (22), said customer interface (12) and said vending application (22) being cooperative to effect vending transactions.

3. In association with a vending machine and with a mobile cellular device, which are operative to mutually communicate over a local wireless link, the cellular device being also operative to communicate via a cellular network with other network devices connected to the Internet -
a method for transmitting operational data stored in the vending machine to a remote server, comprising -
(a) detecting whether a mobile cellular device is in communication with the vending machine over the local wireless link;
(b) when the cellular device is in communication with the vending machine, transmitting any of the stored operational data from the vending machine over the local wireless link to said cellular device;
(c) detecting whether said cellular device is in communication with the cellular network;
(d) whenever said cellular device first is in communication with the cellular network, transmitting any operational data received from the vending machine, over the cellular network and the Internet, to the remote server.

4. The method of claim 3, wherein the steps of the method are repeated in association with successively different mobile cellular devices.

5. The method of claim 3, further comprising -
(e) causing a transaction to be effected cooperatively between the vending machine and the cellular device.
